# FASCICULE DE BREVET EUROPEEN

(11) **EP 2 619 710 B1**
(45) Date de publication et mention de la délivrance du brevet: **25.02.2015**
(21) Numéro de dépôt: 11771232.3
(22) Date de dépôt: 20.09.2011
(51) Int. Cl.: G06K 7/00, G07B 15/00

(54) **SYSTÈME DE MISE EN COMMUNICATION D'UN LECTEUR AVEC UN MÉDIA SANS CONTACT ET ENSEMBLE ASSOCIÉ**
SYSTEM ZUR POSITIONIERUNG EINES LESEGERÄTS IN KOMMUNIKATION MIT EINEM KONTAKTLOSEN MEDIUM UND ZUGEHÖRIGE ANORDNUNG
SYSTEM FOR PLACING A READER IN COMMUNICATION WITH A CONTACTLESS MEDIUM AND ASSOCIATED ASSEMBLY

(30) Priorité: 24.09.2010 FR 1003794
(43) Date de publication de la demande: 31.07.2013
(73) Titulaire: THALES, 92200 Neuilly-sur-Seine (FR)
(72) Inventeur: BIGOT, Jean-Marc, F-77930 Chailly En Biere (FR)
(74) Mandataire: Blot, Philippe Robert Emile
(86) Numéro de dépôt international: PCT/FR2011/052160
(87) Numéro de publication internationale: WO 2012/038657

(56) Documents cités:
- EP-A2- 1 837 798
- WO-A1-02/27682
- WO-A1-2006/016323
- WO-A1-2006/069243
- WO-A1-2009/127246

## Description

La présente invention concerne un système de mise en communication d'au moins un lecteur de média sans contact avec au moins un média sans contact conçu pour être lu par le ou chaque lecteur.

Un tel système est par exemple utilisé lors des phases de test de systèmes de billettique, tels que les systèmes de billettique des réseaux de transports en commun.

La demande internationale de brevet WO 2006/016323 A1 décrit un procédé d'acquisition de billets de voyage dans un système de transport de passagers.

Les systèmes de billettique comprennent généralement des équipements, tels que des valideurs de titres de transport, des automates de vente de contrats de transport, des équipements de contrôle de titres de transport, et un système informatique central (type système d'information), hébergé sur un ensemble de serveurs. Chaque équipement comprend généralement un lecteur de médias sans contact pour dialoguer avec des médias sans contact, tels que par exemple des cartes NFC (de l'anglais « Near Field Communication », c'est-à-dire Communication en Champ Proche), servant de titres de transport.

Chaque titre de transport comporte généralement une mémoire pour stocker un contrat de transport. Un contrat de transport est une autorisation de circuler, sur au moins une partie du réseau de transport, délivrée au titulaire du titre de transport. Il existe différentes sortes de contrats de transport, comme des contrats donnant un accès illimité à une partie du réseau de transport, ou des contrats de transport type « porte monnaie électronique » représentant une donnée quantifiable et prélevés d'une certaine quantité à chaque voyage de l'utilisateur sur le réseau.

Les équipements sont le plus souvent conçus pour remonter des informations de voyage, représentatives des titres de transports vus par chaque équipement, au système informatique central. Le système informatique central est lui conçu pour envoyer des données de mise à jour aux équipements sur un flux descendant, tels que des listes noires de titres de transports bloqués ou des mises à jour du système informatique de chaque équipement (telles que des tables de tarification ou des informations sur la topologie du réseau).

Dans le but de valider de tels systèmes dans leur ensemble ou de valider séparément chacun de ses différents constituants lors des différentes phases du projet de billettique, il est nécessaire de réaliser des opérations de test, de façon à vérifier la validité des informations de voyage écrites sur les titres de transport par les équipements, ainsi que la validité des informations que les équipements remontent au système central, et par la suite, le traitement qui en est fait par le système informatique central.

Les systèmes de mise en communication tels que définis ci-dessus sont donc destinés à mettre en communication une pluralité d'équipements de billettique avec une pluralité de médias sans contact pour que chaque équipement dialogue avec chaque média, de façon à simuler une charge prédictible sur le système de billettique, en vue de contrôler les informations de voyage remontées et le traitement qui en est fait par le système informatique central.

Les systèmes de mise en communication connus comprennent généralement un dispositif mécanique, tel qu'une roue, pour passer chaque média sans contact à proximité du lecteur de chaque équipement. Un tel système n'offre cependant pas entière satisfaction pour les raisons suivantes.

Tout d'abord, un certain espacement doit être respecté entre les médias sans contact. Cette limitation est une contrainte inhérente à la technologie sans contact dans la mesure où une carte doit être seule dans le champ magnétique du lecteur de façon à garantir que celui-ci accède bien à la carte qui est en test par rapport à la position de la roue et non pas à la carte voisine. Cela limite significativement le nombre de médias qu'il est possible de disposer sur une même roue et oblige de plus à recourir à des roues relativement encombrantes.

De plus, le nombre d'équipements pouvant être positionnés autour d'une même roue est lui aussi limité, pour les mêmes raisons, afin d'éviter que deux équipements tentent d'accéder en même temps à une même carte..

Enfin, les tests pouvant être pratiqués sur les systèmes de billettique sont limités et peu représentatifs des conditions de charges réelles des équipements et du système informatique central, car très répétitifs, peu automatisables et sur des éléments participants restreint.

La demande internationale de brevet WO 2009/127246 A1 décrit un système pour connecter un lecteur d'étiquettes RFID à des étiquettes RFID via respectivement une première et des secondes bobines, un système interrupteur entre les bobines permet de sélectionner une bobine et donc une étiquette particulière.

Un des objectifs principaux de l'invention est donc de proposer un système de mise en communication adapté pour mener des tests automatisés plus variés, donc plus représentatifs de la réalité de l'activité sur des systèmes de billettique utilisant comme titres de transport des médias sans contact. Un des objectifs est aussi de limiter les contraintes physiques précitées lors de la mise en oeuvre du système de mise en communication et de faciliter le positionnement du système de mise en communication par rapport aux équipements impliqués dans le test.

A cet effet, l'invention a a pour objet un ensemble selon la revendication 1.

Le système de mise en communication selon l'invention peut comprendre l'une ou plusieurs des caractéristiques suivantes, prises isolément ou suivant toute(s) combinaison(s) techniquement possible(s) :
- les moyens de liaison électrique comprennent un dispositif de commutation, conçu pour mettre en communication électrique chaque dispositif de couplage magnétique amont sélectivement avec le ou chaque dispositif de couplage magnétique aval;
- le dispositif de commutation est une matrice de commutation ou un dispositif multiplexeur/démultiplexeur ;
- le dispositif de commutation est piloté par un moyen informatique de commande programmable ;
- le ou chaque dispositif de couplage magnétique est une inductance ; et
- le système de mise en communication comprend une pluralité de modems, chacun étant intercalé entre un dispositif de couplage magnétique et les moyens de liaison électrique.

L'invention a également pour objet un procédé de test selon la revendication 11.

D'autres caractéristiques et avantages apparaîtront à la lecture de la description qui va suivre, donnée uniquement à titre d'exemple, et faite en se référant aux dessins annexés, dans lesquels :
- la Figure 1 est une vue schématique représentant un système de billettique de réseau de transport en commun ;
- la Figure 2 est une représentation schématique d'un équipement du système de billettique de la Figure 1, et d'un média sans contact servant de titre de transport pour le système de contrôle d'accès de la Figure 1 ;
- La Figure 3 est une vue schématique d'un ensemble comprenant deux valideurs d'un système de billettique et un système de mise en communication de l'état de la technique ;
- la Figure 4 est un schéma d'un ensemble comprenant le système de billettique de la Figure 1 et une première variante d'un système de mise en communication selon l'invention, dans une première configuration ;
- la Figure 5 est une vue similaire à la Figure 4, le système de mise en communication étant dans une deuxième configuration ;
- la Figure 6 est un schéma d'un ensemble comprenant un automate de vente de contrats de transport et une deuxième variante d'un système de mise en communication selon l'invention, dans une première configuration ;
- la Figure 7 est une vue similaire à la Figure 6, le système de mise en communication étant dans une deuxième configuration ;
- la Figure 8 est une représentation schématique d'un équipement, dans une troisième variante de l'ensemble selon l'invention ; et
- la Figure 9 est une vue partielle et schématique d'une quatrième variante du système de mise en communication selon l'invention.

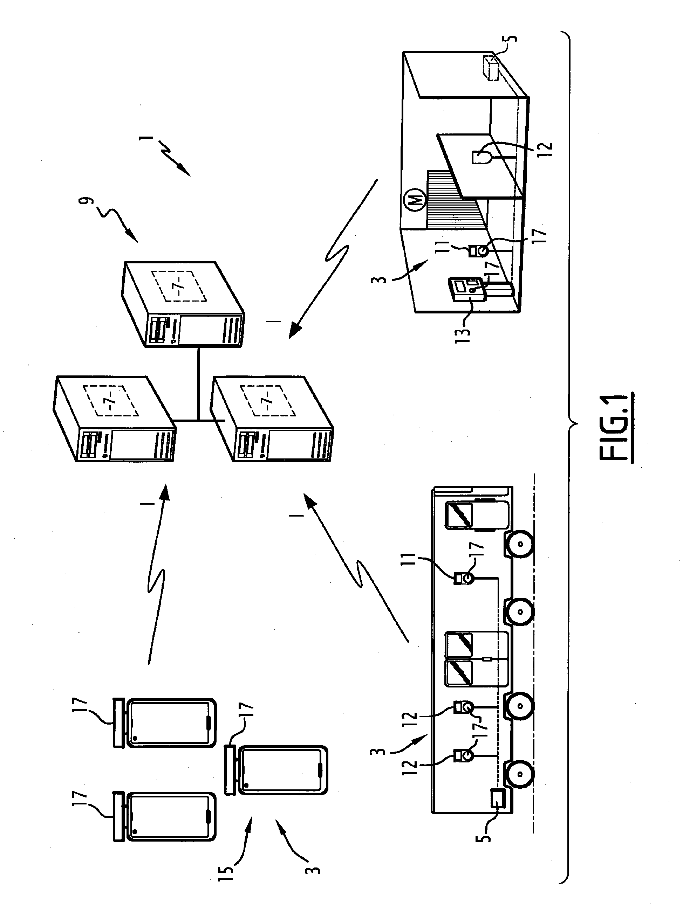

Le système de billettique 1, représenté sur la Figure 1, comporte une pluralité d'équipements 3, une pluralité de concentrateurs de données 5, et un système informatique central 7 hébergé sur un ensemble de serveurs distants 9, distincts des équipements 3 et des concentrateurs de données 5.

Les équipements 3 comprennent des valideurs 11, 12, des automates de vente de contrats de transport 13, et des équipements de contrôle de titres de transport 15. Chaque équipement 3 comporte un lecteur 17 de titres de transport pour échanger des données avec des titres de transport et des moyens 18 pour échanger des données avec un concentrateur de données 5 et avec le système informatique central 7.

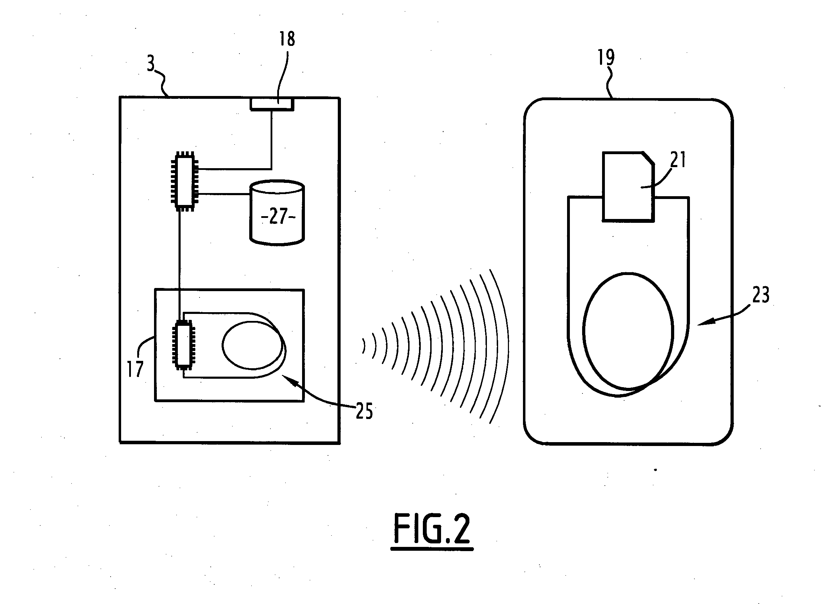

Comme visible sur la Figure 2, chaque titre de transport est un média sans contact 19, tel que par exemple un périphérique NFC du type carte, jeton, téléphone ou clé USB. Dans l'exemple représenté, le média sans contact 19 est une carte NFC. Chaque média sans contact 19 comporte une puce électronique 21, dotée d'un microprocesseur et d'une mémoire pour stocker des données, telles que des contrats de transport, et un circuit d'émission-réception 23.

Chaque lecteur 17 est ainsi conçu pour échanger des données avec chaque média sans contact 19. A cet effet, chaque lecteur 17 comporte un circuit d'émission-réception 25 conçu pour dialoguer à distance avec le circuit d'émission-réception 23 de chaque média sans contact 19, de préférence au moyen d'un champ magnétique. Les circuits d'émission-réception 23 et 25 sont chacun typiquement une inductance.

Chaque lecteur 17 est par ailleurs, de façon connue, adapté pour établir une connexion sécurisée avec chaque média sans contact 19, et pour lire et écrire des données dans la mémoire de la puce 21.

Les moyens 18 sont typiquement des moyens de communication réseau de type Ethernet, Wi-Fi® ou UMTS.

De retour à la Figure 1, les valideurs 11, 12 comprennent des valideurs d'entrée dans le réseau 11 et des valideurs de sortie du réseau 12. Les valideurs d'entrée 11 et de sortie 12 sont de préférence distincts les uns des autres. En variante, ils sont confondus.

La présentation d'un titre de transport devant un valideur 11, 12 a pour effet de déclencher automatiquement la vérification de celui-ci, et, le cas échéant, le traitement de celui-ci relativement à une opération d'entrée ou de sortie dans le réseau. En parallèle le valideur 11, 12 fournit à l'utilisateur des informations relatives à son droit de passage et/ou à la tarification qui lui a été appliqué.

Certains valideurs 11, 12 (type portique de passage) sont associés à un dispositif d'obstruction de passage (non représenté) pour empêcher l'entrée ou la sortie du réseau de transport à un utilisateur n'ayant pas présenté son titre de transport devant le valideur 11, 12, ou dont le contrat de transport n'est pas valide.

Chaque valideur 11, 12 est adapté pour lire les contrats de transport enregistrés dans la mémoire de chaque média sans contact 19, de façon à évaluer la validité des contrats de transport, et pour éventuellement modifier les informations relatives à ces contrats en écrivant de nouvelles données dans les mémoires des médias sans contact 19 concernés. Par exemple, dans le cas où un contrat de transport représente une somme d'argent prépayée par l'usager, le valideur d'entrée 11 devant lequel est présenté le média 19 pour entrer sur le réseau est conçu pour écrire dans la mémoire du média 19 une information représentative du point d'entrée du média 19 dans le réseau, et le valideur de sortie 12 devant lequel est présenté le média 19 pour sortir du réseau est adapté pour débiter ledit contrat de transport d'une quantité fonction du voyage effectué dans le réseau, entre le point d'entrée et le point de sortie du média 19.

Les valideurs 11, 12 sont par exemple installés dans des véhicules de transport, tels que des bus, ou dans des stations, a raison de plusieurs valideurs 11, 12 par véhicule ou par station.

Chaque automate de vente 13 est conçu pour enregistrer de nouveaux contrats de transport dans la mémoire de chaque média sans contact 19, moyennant le paiement d'une somme d'argent prédéterminée par l'utilisateur du média sans contact 19.

Les automates de vente 13 sont de préférence installés dans les stations.

Chaque équipement de contrôle 15 est adapté pour lire les contrats de transport enregistrés dans la mémoire de chaque média sans contact 19, et pour afficher sur un écran des informations représentatives de la validité des contrats de transport.

Les équipements de contrôle 15 sont des équipements portatifs destinés à être utilisés par les contrôleurs du réseau de transport.

En plus des fonctions décrites ci-dessus, les équipements 3 sont également adaptés pour effectuer d'autres actions sur les médias sans contact 19, telles que par exemple les bloquer, s'ils sont référencés dans une liste noire, ou mettre à jour les contrats de transport enregistrés dans la mémoire, si par exemple l'utilisateur a acheté un nouveau contrat de transport sur internet et n'a pas encore pu enregistrer ce contrat dans la mémoire de son média sans contact 19.

Chaque concentrateur de données 5 est localisé au niveau d'un véhicule de transport ou au niveau d'une station, à raison d'un unique concentrateur de données par véhicule ou par station. Il est relié, par des liaisons électriques ou sans fil, à chaque équipement 3 du véhicule ou de la station.

Chaque équipement 3 du véhicule ou de la station est conçu pour mettre en forme des informations de voyage I, représentatives des transactions effectuées au niveau de l'équipement 3, à destination du système informatique central 7. Chaque équipement 3 est conçu pour remonter ces informations de voyage I vers le concentrateur de données 5 associé ou, en l'absence de connexion avec ledit concentrateur de données 5, pour stocker lesdites informations de voyage I dans une mémoire 27 de l'équipement 3 (visible sur la Figure 2), de façon à les transférer à la prochaine connexion.

Les informations de voyage I comprennent par exemple les numéros de série des médias sans contact 19 qui ont été présentés devant l'équipement 3, des informations d'entrée ou de sortie du réseau de chacun desdits médias sans contact 19, ou des informations sur les contrats de transport vendus associés à chacun desdits médias sans contact 19.

Chaque concentrateur de données 5 est adapté pour remonter lesdites informations de voyage I vers le système informatique central 7.

Le système informatique central 7 est adapté pour traiter les informations de voyage I remontées par les équipements 3, de façon à reconstituer les voyages effectués par chaque utilisateur, en vue de renseigner le compte utilisateur de chaque utilisateur et, dans le cas où le réseau de transport est exploité par différents opérateurs, effectuer des arbitrages pour répartir les bénéfices entre les différents opérateurs.

De façon à contrôler la bonne marche des systèmes informatiques, et notamment afin de contrôler la qualité des informations de voyages I remontées au niveau du système informatique central 7, il est nécessaire d'effectuer différents types de tests avant le déploiement sur site du système de billettique 1. Les tests qui sont effectués sur les équipements 3 ont pour but de simuler des voyages d'utilisateurs et consistent généralement en le passage répété de médias sans contact 19 porteurs de contrats de transport devant les équipements 3.

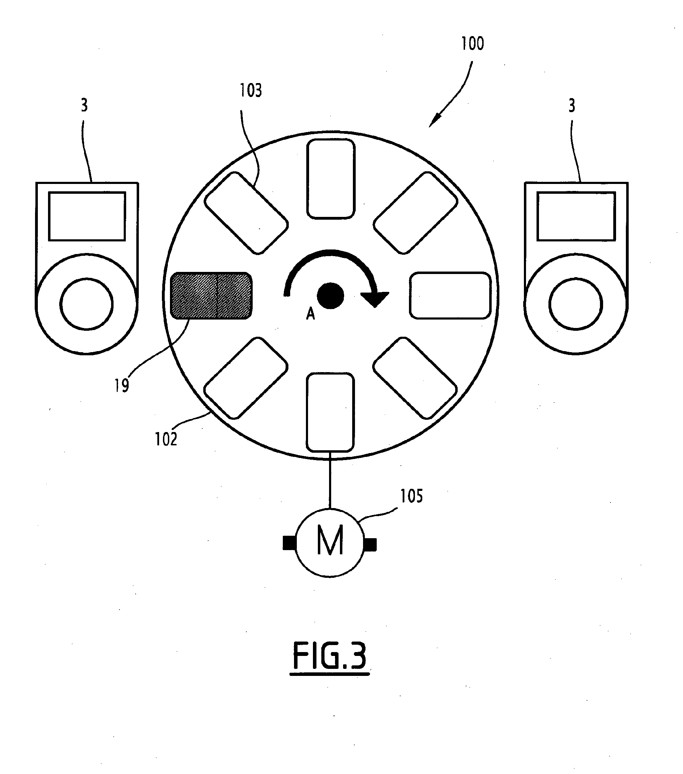

Ces tests sont généralement effectués au moyen du système de mise en communication 100 de l'état de la technique, représenté sur la Figure 3. Ce système 100 comprend une roue 102 discoïdale comportant des emplacements 103 destinés à accueillir les médias sans contact 19 utilisés pour le test, et disposés en périphérie de la roue 102. La roue 102 est entraînée par un moteur 105 adapté pour faire tourner la roue 102 autour d'un axe A s'étendant perpendiculairement au plan moyen de la roue 102 et passant par son centre, de façon à mettre successivement chaque média sans contact 19 en regard d'un équipement 3 testé. Du fait de leur proximité, le média sans contact 19 et l'équipement 3 entrent en communication l'un avec l'autre, en échangeant des données par l'intermédiaire d'un champ magnétique.

Comme évoqué plus haut, un tel système de mise en communication pose des problèmes d'encombrement et ne permet pas de faire de test à grande échelle.

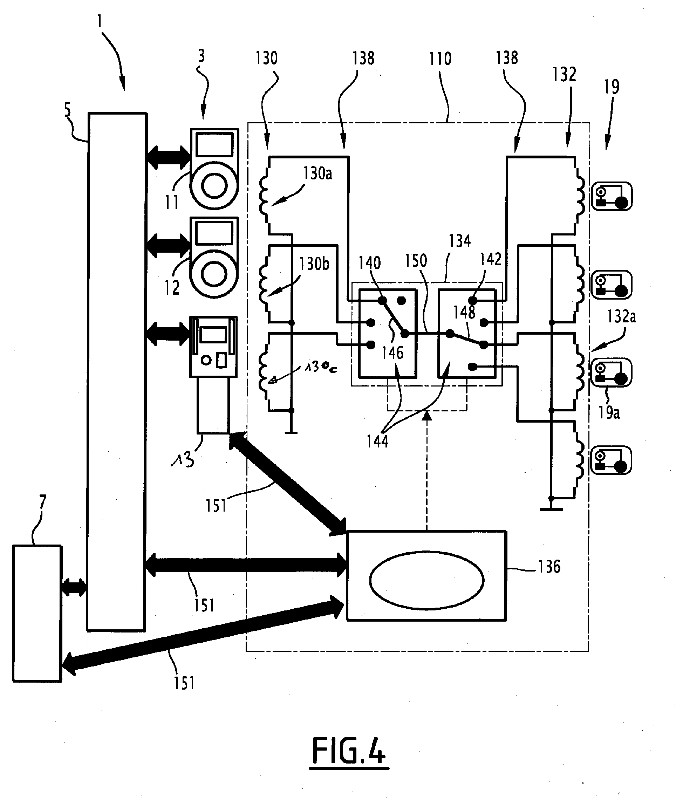

Afin de résoudre ces problèmes, le système de mise en communication 110 selon l'invention, représenté sur les Figures 4 à 9, repose sur une toute autre architecture.

Comme visible sur la Figure 4, le système de mise en communication 110 comprend au moins un dispositif de couplage magnétique amont 130, au moins un dispositif de couplage magnétique aval 132, un dispositif de commutation 134, un moyen informatique de commande 136 du dispositif de commutation 134 et des liaisons électriques 138 entre le dispositif de commutation 134 et chaque dispositif de couplage magnétique 130, 132.

Chaque dispositif de couplage 130, 132 est adapté pour générer un courant électrique sous l'effet d'un champ magnétique extérieur au niveau du dispositif de couplage 130, 132 et pour générer un champ magnétique sous l'effet d'un courant circulant dans le dispositif de couplage 130, 132.

Chaque dispositif de couplage amont 130 est disposé en regard d'un équipement 3 du système de billettique 1, à une distance suffisante pour permettre un couplage magnétique dudit dispositif de couplage amont 130 avec le dispositif d'émission-réception 25 dudit équipement 3. Ainsi, chaque dispositif de couplage amont 130 est adapté pour générer un courant électrique sous l'effet d'un champ magnétique induit par le lecteur 17 de l'équipement 3 en regard duquel est disposé ledit dispositif de couplage amont 130, et pour induire un champ magnétique à destination dudit équipement 3 sous l'effet d'un courant circulant dans ledit dispositif de couplage amont 130.

De même, chaque dispositif de couplage aval 132 est disposé en regard d'un média sans contact 19, à une distance suffisante pour permettre un couplage magnétique dudit dispositif de couplage aval 132 avec le dispositif d'émission-réception 23 dudit média 19. Ainsi, chaque dispositif de couplage aval 132 est adapté pour générer un courant électrique sous l'effet d'un champ magnétique induit par le média sans contact 19 en regard duquel est disposé ledit dispositif de couplage aval 132, et pour induire un champ magnétique à destination dudit média sans contact 19 sous l'effet d'un courant circulant dans ledit dispositif de couplage aval 132.

Chaque dispositif de couplage 130, 132 est typiquement une inductance.

Le dispositif de commutation 134 comprend une pluralité de ports amont 140, une pluralité de ports aval 142, et un système de commutateurs pilotés 144.

Chaque port amont 140 est relié, par une liaison électrique 138, à un dispositif de couplage amont 130. De même, chaque port aval 142 est relié, par une liaison électrique 138, à un dispositif de couplage aval 132.

Le système de commutateurs pilotés 144 est adapté pour mettre en communication électrique sélectivement chaque port amont 140 avec chaque port aval 142.

Dans l'exemple représenté, le système de commutateurs pilotés 144 comporte un commutateur amont 146, un commutateur aval 148, et une branche intermédiaire 150 reliant électriquement le commutateur amont 146 au commutateur aval 148. Le commutateur amont 146 est adapté pour mettre sélectivement chaque port amont 140 en communication électrique avec la branche intermédiaire 150. De même, le commutateur aval 148 est adapté pour mettre en communication électrique sélectivement chaque port aval 142 avec la branche intermédiaire 150.

Le dispositif de commutation 134 est typiquement une carte de relais à micro commutateurs, mieux connue sous la dénomination de carte à relais microswitchs.

Dans l'exemple représenté, le dispositif de commutation 134 est un dispositif multiplexeur/démultiplexeur. Par exemple, la référence NI SCXI-1193, commercialisée par la société National Instrument, peut constituer le dispositif de commutation 134. D'autres dispositifs du commerce sont cependant envisageables.

En variante, le dispositif de commutation 134 est une matrice de commutation adaptée pour réaliser des interconnections matricielles, de façon à relier simultanément plusieurs ports amont 140 à plusieurs ports avals 142.

Le moyen informatique de commande 136 est par exemple un ordinateur. Il est relié au dispositif de commutation 134, par exemple par une liaison du type USB, et est adapté pour piloter le basculement des commutateurs pilotés 144.

Le moyen informatique de commande 136 comprend également des moyens de communication 151 pour communiquer avec chaque équipement 3 et/ou avec chaque concentrateur 5 et/ou avec le système informatique central 7, de façon à piloter au moins un équipement 3 et/ou le système informatique central 7 et à contrôler les informations de voyage I remontées par chaque équipement 3 et/ou le traitement des informations de voyage I qui est fait par le système informatique central 7. Les moyens de communication 151 sont typiquement des moyens de communication de type Ethernet, Wi-Fi® ou UMTS.

Les liaisons électriques 138 comprennent par exemple des câbles coaxiaux.

Une version utilisable sur site du système de mise en communication 110 se présente par exemple sous la forme d'une mallette regroupant le dispositif de commutation 134 et le module de commande 136, et à laquelle sont branchées les liaisons électriques 138 avec, aux extrémités libres des liaisons électriques 138, les dispositifs de couplage 130, 132. L'objectif de cette variante du dispositif est de faciliter les tests de mise en service des équipements installés sur site.

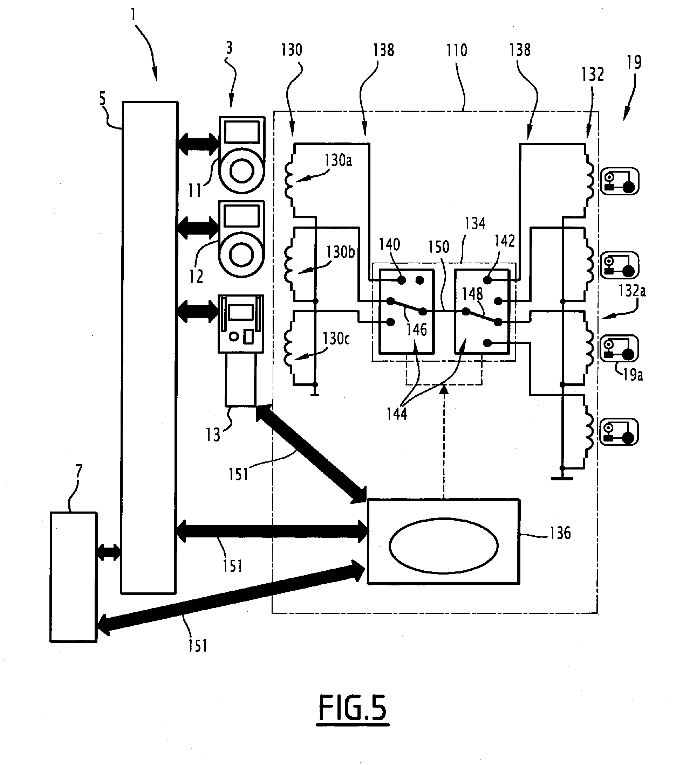

Dans la première variante représentée sur les Figures 4 et 5, le système de mise en communication 110 comprend une pluralité de dispositifs de couplage amont 130, un premier dispositif de couplage amont 130a étant disposé en regard d'un valideur d'entrée 11 et un deuxième dispositif de couplage amont 130b étant disposé en regard d'un valideur de sortie 12. Le système de mise en communication 110 comprend également une pluralité de dispositifs de couplage aval 132, chacun étant disposé en regard d'un média sans contact 19. Enfin, le moyen informatique de commande 136 est connecté à des équipements 3, à des concentrateurs 5 et au système informatique central 7.

Dans la première configuration représentée sur la Figure 4, les commutateurs pilotés 144 sont basculés de telle sorte que le premier dispositif de couplage amont 130a est relié électriquement à un premier dispositif de couplage aval 132a disposé en regard d'un premier média sans contact 19a. Les premiers dispositifs de couplage amont 130a et aval 132a font ainsi partie d'un même circuit fermé et le courant généré dans le premier dispositif de couplage amont 130a sous l'effet du champ magnétique émis par le valideur 11 traverse également le premier dispositif de couplage aval 132a. Le premier dispositif de couplage aval 132a génère donc, sous l'effet de ce courant le traversant, un champ magnétique qui est l'image du champ magnétique généré par le valideur d'entrée 11.

Selon le mode de réalisation du dispositif, une atténuation plus ou moins importante est présente. Dans la mesure où elle ne conduit pas à des niveaux proches des seuils de détection du media et/ou du lecteur, elle n'est pas préjudiciable à la lecture/écriture de la carte, et le déport de la lecture reste transparent.

Ainsi, dans cette première configuration, le lecteur 17 du valideur d'entrée 11 et le premier média sans contact 19a sont couplés magnétiquement l'un avec l'autre, via le système de mise en communication 110. En d'autres termes, tout champ magnétique émis par le valideur d'entrée 11 est répercuté au niveau du premier média 19a par le premier dispositif de couplage aval 132a, et tout champ magnétique émis par le média 19a est répercuté au niveau du valideur d'entrée 11 par le premier dispositif de couplage amont 130a.

Pour le valideur d'entrée 11, le premier dispositif de couplage amont 130a se comporte comme s'il était le média 19a, et pour le média 19a, le premier dispositif de couplage aval 132a se comporte comme s'il était le lecteur 17 du valideur d'entrée 11. Le système de mise en communication 110 est ainsi transparent pour chacun des valideur d'entrée 11 et média 19a.

Le valideur d'entrée 11 établit ainsi une connexion sécurisée avec le média 19a, consulte les contrats de transport enregistrés dans la mémoire du média 19a et, si au moins un contrat est valide, autorise l'entrée dans le réseau de transport au média 19a tout en lui appliquant les règles tarifaires en vigueur (qui lui proviennent des informations descendantes du système central 7). Le valideur d'entrée 11 envoie également des informations de voyage I, regroupant par exemple le numéro de série du média 19a et une information de point d'entrée dans le réseau, au système informatique central 7, via le concentrateur de données 5 associé.

Au bout d'un temps prédéterminé, les commutateurs pilotés 144 basculent de façon à déconnecter les premiers dispositifs de couplage amont 130a et aval 132a. Ils basculent alors dans une deuxième configuration, représentée sur la Figure 5, dans laquelle le deuxième dispositif de couplage amont 130b est relié électriquement au premier dispositif de couplage aval 132a.

De même que décrit ci-dessus pour le valideur d'entrée 11 et le média 19a, le valideur de sortie 12 et le média 19a se retrouvent couplés électromagnétiquement l'un avec l'autre via le système de mise en communication 110.

Le valideur de sortie 12 établit alors une connexion sécurisée avec le média 19a, consulte les contrats de transport enregistrés dans la mémoire du média 19a et, si au moins un contrat est valide, autorise le média 19a à sortir du réseau de transport, tout en lui appliquant les règles tarifaires en vigueur (qui lui proviennent des informations descendantes du système central 7). Le valideur de sortie 12 envoie également des informations de voyage I, regroupant par exemple le numéro de série du média 19a et une information de point de sortie du réseau, au système informatique central 7, via le concentrateur de données 5 associé.

Au bout d'un temps prédéterminé, les commutateurs pilotés 144 basculent de façon à déconnecter le deuxième dispositif de couplage amont 130b et le premier dispositif de couplage aval 132a. Ils basculent par exemple de façon à relier électriquement un troisième dispositif de couplage amont 130c, disposé en regard d'un automate de vente 13, à un autre dispositif de couplage aval 132.

Parallèlement à ces opérations de commutation, le moyen informatique de commande 136 contrôle que les informations de voyage I remontées par les équipements 3 sont conformes aux opérations de commutation qui ont été réalisées et que le traitement qui en est fait par le système informatique central 7 est correct. Le moyen informatique de commande 136 agit également par moments sur le système informatique central 7 pour enclencher des mises à jour des données des équipements 3.

On notera que le système de mise en communication 110 transfère passivement les signaux entre les équipements 3 et les médias 19, sans apport d'énergie aux signaux transférés. Le système de mise communication 110 constitue donc sur ce point un système passif.

On conçoit que, en multipliant les dispositifs de couplage amonts 130 et avals 132, et en recourant de plus à un dispositif de commutation 134 de type matriciel, il est possible de tester simultanément plusieurs d'équipements 3 avec plusieurs médias 19. Il devient ainsi possible de simuler des déplacements d'utilisateurs simultanées, permettant ainsi d'augmenter le nombre d'opérations possibles sur une période de temps donnée, par rapport à un dispositif de commutation du type multiplexeur / démultiplexeur.

De plus, les commutations et les contrôles étant effectués par un moyen informatique de commande, il est facile d'automatiser le test. Il devient ainsi possible de programmer un scénario de test répétable.

Enfin, ce système de mise en communication est non intrusif vis à vis du système à tester.

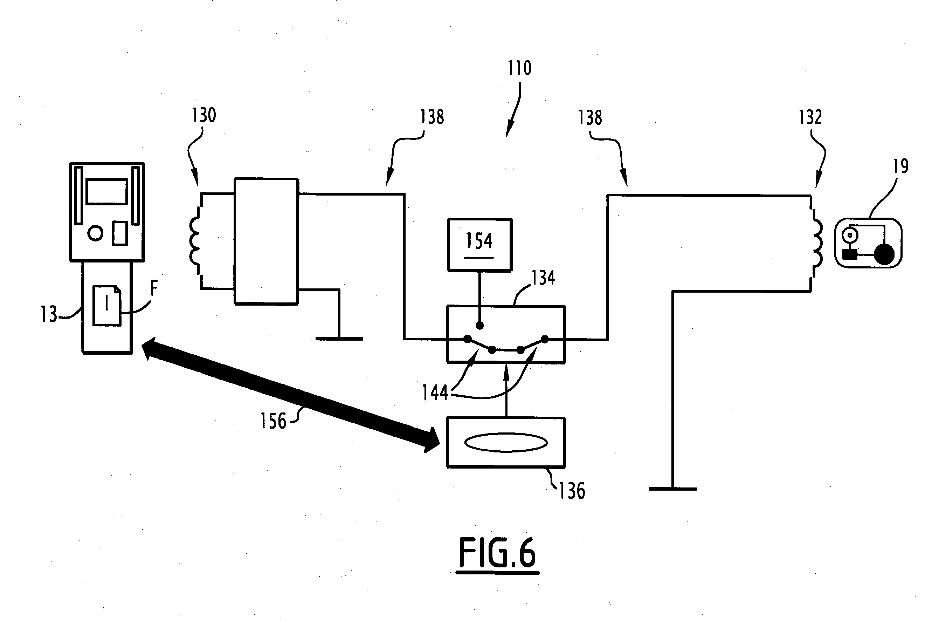

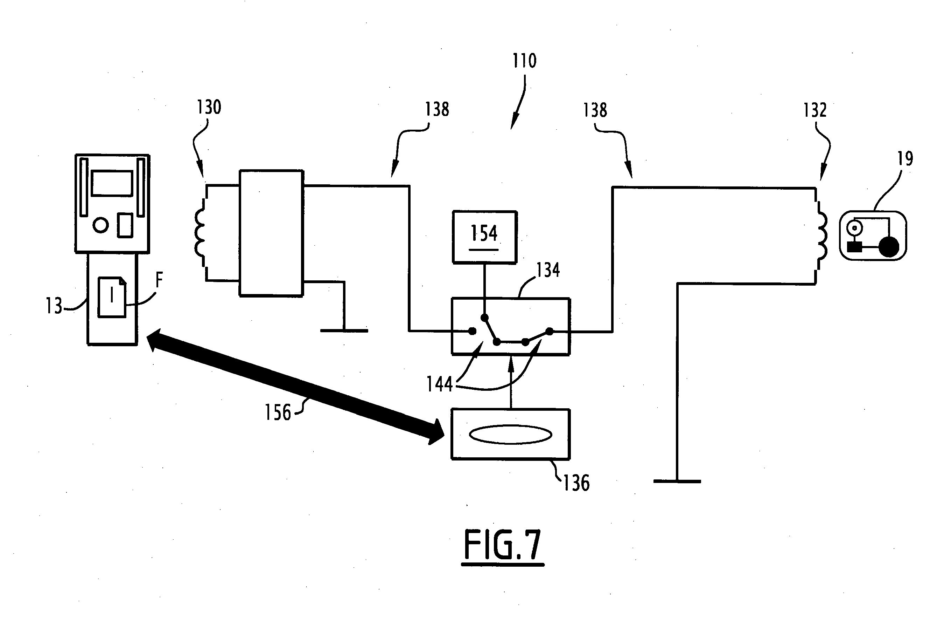

Dans la variante présentée sur les Figures 6 et 7, le système de mise en communication 110 comprend un unique dispositif de couplage amont 130 et un unique dispositif de couplage aval 132.

Dans cette variante, destinée à tester spécifiquement un équipement de manière isolée du système central, le système de mise en communication 110 comprend en outre un dispositif de réinitialisation/vérification 154 adapté pour réinitialiser chaque média 19 avec lequel il est mis en communication, ou pour relire son contenu de manière à valider le traitement qui lui a été appliqué. En d'autres termes, le dispositif de réinitialisation/vérification 154 est adapté pour effacer des données de la mémoire d'un média 19 et pour remettre celle-ci dans un état réinitialisé, dans lequel aucun contrat de transport n'est présent, ou pour relire son contenu de manière à valider le traitement qui lui a été appliqué, lorsqu'il est mis en communication électromagnétique avec ledit média 19.

Le dispositif de réinitialisation 154 est branché électriquement au dispositif de commutation 134, qui est adaptée pour le raccorder électriquement au dispositif de couplage aval 132.

Dans l'exemple représenté sur les Figures 6 et 7, le dispositif de couplage amont 130 est disposé en regard d'un automate de vente 13 déconnecté du système informatique central 7, et le dispositif de couplage aval 132 est disposé en regard d'un média sans contact 19. En outre, le moyen informatique de commande 136 est branché, via une connectique réseau 156, à l'automate 13. Le système de mise en communication 110 sert alors à tester spécifiquement le fonctionnement dudit automate 13. En variante, un autre équipement 3 du système de billettique 1 pourrait être testé au moyen dudit système de mise en communication 110. Cependant, cette deuxième variante du système de mise communication 110 est particulièrement adaptée au test des automates de vente, comme cela va être décrit ci-après.

Dans une première configuration du système de mise en communication 110, représentée sur la Figure 6, le dispositif de couplage amont 130 et le dispositif de couplage aval 132 sont reliés électriquement. L'automate de vente 13 et le média 19 sont alors en communication électromagnétique.

Le moyen informatique de commande 136 pilote alors l'automate 13 de façon à exécuter une vente de contrat de transport. L'automate 13 écrit dans la mémoire du média 19 un contrat de vente et crée un fichier F stockant des informations de voyage I relatives à cette transaction. Ce fichier F est enregistré dans la mémoire 27 de l'automate 13 en attendant de pouvoir être remontée vers le système informatique central 7.

Au bout d'un temps prédéterminé, les commutateurs pilotés 144 basculent de façon à déconnecter les dispositifs de couplage 130, 132 et basculent dans une deuxième configuration, représentée sur la Figure 7, dans laquelle le dispositif de réinitialisation/vérification 154 est relié électriquement au dispositif de couplage aval 132.

Le dispositif de réinitialisation/vérification 154 est alors en communication électromagnétique avec le média 19 et peut effectuer les opérations de relecture et de vérification des informations du média 19.

Par la suite, le dispositif de réinitialisation/vérification 154 réinitialise le média 19 en effaçant le contrat de transport écrit précédemment par l'automate 13.

Puis, au bout d'un temps prédéterminé, les commutateurs pilotés 144 basculent de façon à déconnecter le dispositif de réinitialisation/vérification 154 du dispositif de couplage aval 132 et reviennent à la première configuration présentée sur la Figure 6.

Ce cycle peut être réitéré autant de fois que nécessaire.

En parallèle de ces opérations de commutation, le moyen informatique de commande 136 contrôle les informations de voyage I stockées dans les fichiers F créés par l'automate de vente 13 de façon à vérifier qu'elles sont conformes aux ventes simulées.

Ainsi, il est possible de simuler rapidement, et de façon automatique, un grand nombre de ventes sur un même automate, ce qui permet de contrôler en charge le bon fonctionnement de ce dernier.

Ce procédé rend aussi possible l'exécution de manière automatique et systématique des différents cas possible relatif à une opération de vente ou autre.

On conçoit que cette deuxième variante du système de communication 110 est extrapolable à un système de communication comprenant une pluralité de dispositifs amont 130 et de dispositifs aval 132, de façon à permettre le test simultané de plusieurs équipements 3.

On conçoit également que, en lieu et place des équipements 3, il est possible de placer les seuls lecteurs 17 en regard des dispositifs de couplage amont 130, de façon à tester spécifiquement le seul fonctionnement des lecteurs 17. Une telle utilisation du système de mise en communication 110 est particulièrement adaptée pour tester les lecteurs 17 en sortie de leurs chaînes de fabrication.

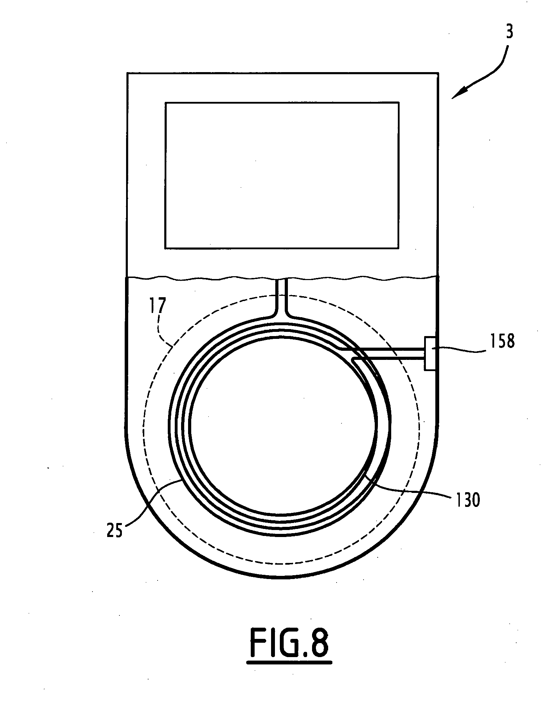

Tel que présenté ci-dessus, le système de billettique 1 et le système de mise en communication 110 sont des systèmes distincts. En variante, et comme présenté sur la Figure 8, une partie du système de mise en communication 110 est intégrée dans le système de billettique 1.

L'équipement représenté sur la Figure 8 comporte ainsi, en plus du circuit d'émission-réception 25 de son lecteur 17, un dispositif de couplage amont 130 du système de mise en communication 110. Le dispositif de couplage 130 est disposé dans l'équipement 3 de façon à permettre un couplage optimal des champs magnétiques entre dans le circuit d'émission-réception 25 et le dispositif de couplage amont 130. Le dispositif de couplage 130 est disposé dans le lecteur 17, comme représenté, ou à l'extérieur du lecteur 17.

L'équipement 3 comporte en outre une prise 158, reliée électriquement au dispositif de couplage amont 130, pour le branchement dudit dispositif de couplage amont 130 à une liaison électrique 138 du système de mise en communication 110.

Tant que ledit dispositif de couplage 130 n'est pas raccordé électriquement au reste du système de mise en communication 110, il ne perturbe pas le champ magnétique émis par le lecteur 17 de l'équipement 3.

Grâce à une telle implantation du dispositif de couplage amont, le travail de l'opérateur installant le système de mise en communication 110 est simplifié. En effet, celui-ci n'a qu'à brancher une liaison électrique 138 à la prise 158 et n'a pas à se préoccuper du placement du dispositif de couplage amont 130 par rapport au lecteur 17.

Tel que présenté ci-dessus, les courants circulant dans les liaisons électriques 138 sont les mêmes que les courants générés dans les dispositifs de couplage. Or ces courants ont généralement à une fréquence de porteuse élevée, typiquement une fréquence de porteuse à 13,56MHz, ce qui occasionne de fortes pertes de signal dans les liaisons 138. La longueur des liaisons électriques 138 est donc de ce fait limitée, de façon à éviter un trop fort affaiblissement de signal. En outre, le dispositif de commutation 134 doit être dimensionnée de façon à pouvoir supporter des signaux à une telle fréquence, ce qui occasionne un surcoût pour le système de mise en communication 110.

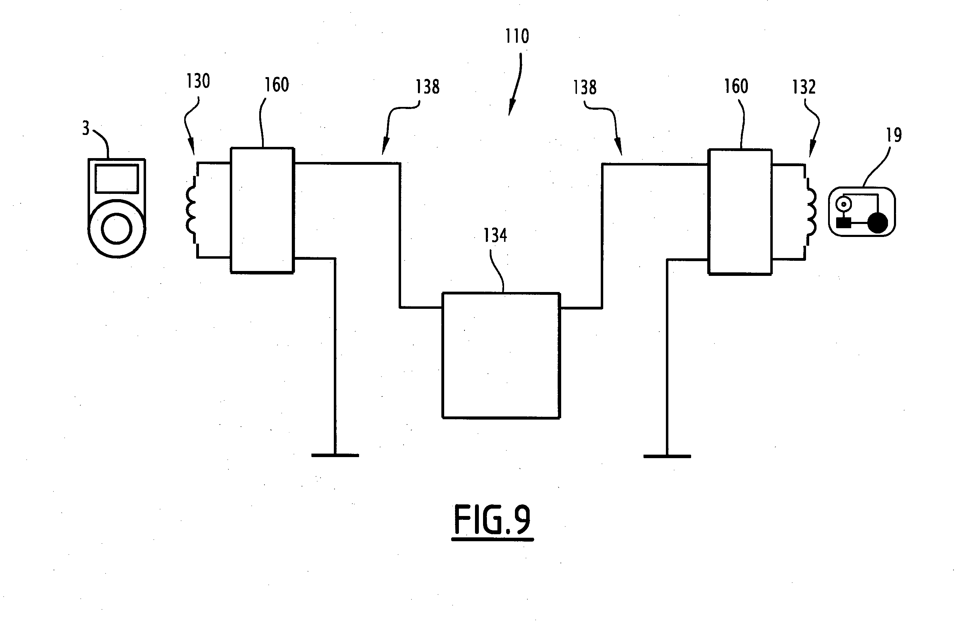

Pour pallier ces problèmes, une quatrième variante du système de communication 110 est proposée, comme visible sur la Figure 9. Dans cette variante, le dispositif de communication 110 comprend une pluralité de modems 160, chacun étant intercalé entre un dispositif de couplage 130, 132 et la liaison électrique 138 associée.

Ces modems 160 sont conçus pour moduler/démoduler les signaux en sortie des dispositifs de couplage 130, 132, de façon à transporter les données échangées entre les équipements 3 et les médias 19 sans leur fréquence porteuse, donc avec des contraintes physiques beaucoup plus faibles.

De préférence, lorsque les dispositifs de couplage amont 130 sont intégrés au sein des équipements 3, comme décrit dans la deuxième variante, les modems 160 associés sont également intégrés au sein desdits équipements 3.

L'invention a également pour objet un système de mise en communication combinant les caractéristiques des différentes variantes présentées ci-dessus.

On conçoit dès lors que le dispositif selon l'invention présente un certain nombre d'avantages, notamment en termes d'encombrement, de déploiement et d'automatisation.

On notera que l'invention a été décrite dans le cadre d'un dispositif de test pour un système de billettique, mais qu'elle est également adaptée pour effectuer des tests sur d'autres systèmes complets ou des équipements seuls s'interfaçant avec des médias utilisant la technologie sans contact, tels que des systèmes de contrôle d'accès de parking, des systèmes de vente, ou des systèmes de monétique.

## Revendications

1. Ensemble comprenant un système de billettique (1) comportant une pluralité d'équipements (3), chaque équipement (3) comportant un lecteur (17) de titres de transport, chaque titre de transport étant un média sans contact (19), et un système (110) de mise en communication des lecteurs (17) d'une pluralité d'équipements (3) avec au moins un média sans contact (19) conçu pour être lu par chaque lecteur (17), **caractérisé en ce que** le système de mise en communication (110) comprend :
- une pluralité de dispositifs de couplage magnétique amont (130, 130a, 130b, 130c), chacun étant adapté pour générer un courant électrique induit sous l'effet d'un champ magnétique au niveau du dispositif de couplage magnétique amont (130, 130a, 130b, 130c) et pour générer un champ magnétique sous l'effet d'un courant électrique circulant dans le dispositif de couplage magnétique amont (130, 130a, 130b, 130c), chaque dispositif de couplage magnétique amont (130, 130a, 130b, 130c) étant disposé en regard d'un équipement (3) du système de billettique (1), à une distance suffisante pour permettre un couplage magnétique dudit dispositif de couplage magnétique amont (130, 130a, 130b, 130c) avec un dispositif d'émission-réception (25) du lecteur (17) dudit équipement (3) ;
- au moins un dispositif de couplage magnétique aval (132, 132a) pour générer un champ magnétique sous l'effet d'un courant électrique circulant dans le dispositif de couplage magnétique aval (132, 132a) et pour générer un courant électrique induit sous l'effet d'un champ magnétique au niveau du dispositif de couplage magnétique aval (132, 132a), le ou chaque dispositif de couplage magnétique aval (132, 132a) étant disposé en regard d'un média sans contact (19), à une distance suffisante pour permettre un couplage magnétique dudit dispositif de couplage magnétique aval (132, 132a) avec un dispositif d'émission-réception (23) dudit média sans contact (19) ; et
- des moyens de liaison électrique (134, 138) pour relier électriquement chaque dispositif de couplage magnétique amont (130, 130a, 130b, 130c) au ou à chaque dispositif de couplage magnétique aval (132, 132a).

2. Ensemble selon la revendication 1, **caractérisé en ce que** chaque dispositif de couplage magnétique (130, 130a, 130b, 130c, 132, 132a) est une inductance.

3. Ensemble selon la revendication 1 ou 2, **caractérisé en ce que** les moyens de liaison électrique (134, 138) comprennent un dispositif de commutation (134), conçu pour mettre en communication électrique chaque dispositif de couplage magnétique amont (130, 130a, 130b, 130c) sélectivement avec le ou chaque dispositif de couplage magnétique aval (132, 132a).

4. Ensemble selon la revendication 3, **caractérisé en ce que** le dispositif de commutation (134) est une matrice de commutation ou un dispositif multiplexeur/démultiplexeur.

5. Ensemble selon la revendication 3 ou 4, **caractérisé en ce que** le dispositif de commutation (134) est piloté par un moyen informatique de commande (136) programmable.

6. Ensemble selon l'une quelconque des revendications précédentes, **caractérisé en ce qu'**il comprend une pluralité de modems (160), chacun étant intercalé entre un dispositif de couplage magnétique (130, 130a, 130b, 130c, 132, 132a) et les moyens de liaison électrique (134, 138).

7. Ensemble selon l'une quelconque des revendications précédentes, **caractérisé en ce qu'**au moins un lecteur (17) et au moins un dispositif de couplage magnétique amont (130) sont intégrés au sein d'un même équipement (3).

8. Ensemble selon la revendication 7, **caractérisé en ce que** ledit équipement (3) comprend en outre un modem (160) associé au dispositif de couplage magnétique amont (130).

9. Ensemble selon la revendication 7 ou 8, **caractérisé en ce que** ledit équipement (3) comprend en outre des moyens (18) pour échanger des données avec un système informatique central (7) commun à plusieurs équipements (3), au moins une partie de ces données étant issues de ou destinées au dispositif de couplage (130) intégré dans ledit équipement (3).

10. Ensemble selon l'une quelconque des revendications précédentes, **caractérisé en ce que** chaque équipement (3) comprend des moyens (18) pour échanger des données avec un système informatique central (7) commun aux équipements (3), au moins une partie de ces données étant issues de ou destinées à un média sans contact (19), et **en ce que** le système de mise en communication (110) comprend un moyen informatique de commande (136), comportant des moyens (151) de communication avec le système informatique central (7).

11. Procédé de test du fonctionnement d'au moins un lecteur de média sans contact (17), adapté pour échanger des données avec un média sans contact (19), dans un système de billettique (1), le système de billettique (1) comportant une pluralité d'équipements (3), chaque équipement (3) comportant un lecteur (17) de titres de transport, chaque titre de transport étant un média sans contact (19), **caractérisé en ce que** le procédé comporte les étapes suivantes :
- couplage magnétique des lecteurs (17) d'une pluralité d'équipements (3) à un système de mise en communication (110), via, pour chaque équipement (3), un dispositif de couplage magnétique amont (130, 130a, 130b, 130c) ;
- couplage magnétique du système de mise en communication (110) à au moins un média sans contact (19) via, pour le ou chaque média sans contact (19), un dispositif de couplage magnétique aval (132, 132a) ;
- mise en communication électrique d'un premier dispositif de couplage magnétique amont (130a) avec un premier dispositif de couplage magnétique aval (132a) ; et
- mise en communication électrique d'un deuxième dispositif de couplage magnétique amont (130b), différent du premier (130a), avec le premier dispositif de couplage magnétique aval (132a) ; et/ou
- mise en communication électrique du premier dispositif de couplage magnétique amont (130a) avec un deuxième dispositif de couplage magnétique aval (132), différent du premier (132a) ; et/ou
- mise en communication électrique du deuxième dispositif de couplage magnétique amont (130b) avec le deuxième dispositif de couplage magnétique aval (132).

## Patentansprüche

1. Anordnung mit einem E-Ticket-System (1) aufweisend eine Mehrzahl von Vorrichtungen (3), wobei jede Vorrichtung (3) einen Leser (17) für Fahrausweise aufweist, wobei jeder Fahrausweis ein kontaktloses Medium (19) ist, und ein System (110) zum in Kommunikation Bringen der Leser (17) einer Mehrzahl von Vorrichtungen (3) mit mindestens einem kontaktlosen Medium (19), das dazu vorgesehen ist, von jedem Leser (17) gelesen zu werden, dadurch charakterisiert, dass das System zum in Kommunikation Bringen (110) aufweist:
- eine Mehrzahl von Aufwärts-Magnetische-Kopplung-Vorrichtungen (130, 130a, 130b, 130c), wobei jede eingerichtet ist zum Erzeugen eines elektrischen Stroms, induziert unter dem Effekt eines magnetischen Felds auf Höhe der Aufwärts-Magnetische-Kopplung-Vorrichtung (130, 130a, 130b, 130c), und zum Erzeugen eines magnetischen Felds unter dem Effekt eines elektrischen Stroms, der in der Aufwärts-Magnetische-Kopplung-Vorrichtung (130, 130a, 130b, 130c) zirkuliert, wobei jede Aufwärts-Magnetische-Kopplung-Vorrichtung (130, 130a, 130b, 130c) gegenüber einer Vorrichtung (3) des E-Ticket-Systems (1) in einer Entfernung angeordnet ist, die geeignet ist, eine magnetische Kopplung der Aufwärts-Magnetische-Kopplung-Vorrichtung (130, 130a, 130b, 130c) mit einer Sende-Empfangs-Vorrichtung (25) des Lesers (17) der Vorrichtung (3) zu ermöglichen;
- mindestens eine Abwärts-Magnetische-Kopplung-Vorrichtung (132, 132a) zum Erzeugen eines magnetischen Felds unter dem Effekt eines elektrischen Stroms, der in der Abwärts-Magnetische-Kopplung-Vorrichtung (132, 132a) zirkuliert und zum Erzeugen eines elektrischen Stroms, induziert unter dem Effekt eines magnetischen Felds auf Höhe der Abwärts-Magnetische-Kopplung-Vorrichtung (132, 132a), wobei die oder jede Abwärts-Magnetische-Kopplung-Vorrichtung (132, 132a) gegenüber einem kontaktlosen Medium (19) in einer Entfernung angeordnet ist, die geeignet ist, eine magnetische Kopplung der Abwärts-Magnetische-Kopplung-Vorrichtung (132, 132a) mit einer Sende-Empfangs-Vorrichtung (25) des kontaktlosen Mediums (19) zu ermöglichen; und
- elektrische Verbindungsmittel (134, 138) zum elektrischen Verbinden jeder Aufwärts-Magnetische-Kopplung-Vorrichtung (130, 130a, 130b, 130c) mit der oder mit jeder Abwärts-Magnetische-Kopplung-Vorrichtung (132, 132a).

2. Anordnung gemäß Anspruch 1, dadurch charakterisiert, dass jede Magnetische-Kopplung-Vorrichtung (130, 130a, 130b, 130c, 132, 132a) eine Induktivität ist.

3. Anordnung gemäß Anspruch 1 oder 2, dadurch charakterisiert, dass die elektrischen Verbindungsmittel (134, 138) eine Schaltvorrichtung (134) aufweisen, die dazu vorgesehen ist, jede Aufwärts-Magnetische-Kopplung-Vorrichtung (130, 130a, 130b, 130c) selektiv mit der oder jeder Abwärts-Magnetische-Kopplung-Vorrichtung (132, 132a) in elektrische Kommunikation zu bringen.

4. Anordnung gemäß Anspruch 3, dadurch charakterisiert, dass die Schaltvorrichtung (134) eine Schaltmatrix oder eine Multiplex/Demultiplex-Vorrichtung ist.

5. Anordnung gemäß Anspruch 3 oder 4, dadurch charakterisiert, dass die Schaltvorrichtung (134) von einem programmierbaren Datenverarbeitungssteuermittel (136) gesteuert wird.

6. Anordnung gemäß einem der vorhergehenden Ansprüche, dadurch charakterisiert, dass sie eine Mehrzahl von Modems (160) aufweist, wobei jedes zwischen eine Magnetische-Kopplung-Vorrichtung (130, 130a, 130b, 130c, 132, 132a) und die elektrischen Verbindungsmittel (134, 138) geschaltet ist.

7. Anordnung gemäß einem der vorhergehenden Ansprüche, dadurch charakterisiert, dass mindestens ein Leser (17) und mindestens eine Aufwärts-Magnetische-Kopplung-Vorrichtung (130) in dieselbe Vorrichtung (3) integriert sind.

8. Anordnung gemäß Anspruch 7, dadurch charakterisiert, dass die Vorrichtung (3) außerdem ein Modem (160) aufweist, das der Aufwärts-Magnetische-Kopplung-Vorrichtung (130) zugeordnet ist.

9. Anordnung gemäß Anspruch 7 oder 8, dadurch charakterisiert, dass die Vorrichtung außerdem Mittel (18) zum Austauschen von Daten mit einem zentralen Datenverarbeitungssystem (7), das mehrere Vorrichtungen (3) gemeinsam haben, aufweist, wobei mindestens ein Teil dieser Daten von der Kopplungsvorrichtung (130), die in der Vorrichtung integriert ist, ausgegeben werden, oder für die Kopplungsvorrichtung (130), die in dieser Vorrichtung integriert ist, bestimmt sind.

10. Anordnung gemäß einem der vorhergehenden Ansprüche, dadurch charakterisiert, dass jede Vorrichtung (3) Mittel (18) zum Austauschen von Daten mit einem zentralen Datenverarbeitungssystem (7), das den Vorrichtungen (3) gemeinsam ist, aufweist, wobei mindestens ein Teil dieser Daten von einem kontaktlosen Medium (19) ausgegeben werden oder für ein kontaktloses Medium (19) bestimmt sind, und dadurch, dass das System zum in Kommunikation Bringen (110) ein Datenverarbeitungssteuermittel (136) aufweist, das Mittel (151) zur Kommunikation mit dem zentralen Datenverarbeitungssystem (7) aufweist.

11. Verfahren zum Testen der Funktion mindestens eines Lesers für kontaktlose Medien (17), der eingerichtet ist zum Austauschen von Daten mit einem kontaktlosen Medium (19), in einem E-Ticket-System (1), wobei das E-Ticket-System (1) eine Mehrzahl von Vorrichtungen (3) aufweist, wobei jede Vorrichtung (3) einen Leser (17) für Fahrausweise aufweist, wobei jeder Fahrausweis ein kontaktloses Medium (19) ist, dadurch charakterisiert, dass das Verfahren die folgenden Schritte aufweist:
- magnetische Kopplung der Leser (17) einer Mehrzahl von Vorrichtungen (3) mit einem System zum in Kommunikation Bringen (110) mittels, für jede Vorrichtung (3), einer Aufwärts-Magnetische-Kopplung-Vorrichtung (130, 130a, 130b, 130c);
- magnetische Kopplung des Systems zum in Kommunikation Bringen (110) mit mindestens einem kontaktlosen Medium (19) mittels, für jedes kontaktlose Medium (19), einer Abwärts-Magnetische-Kopplung-Vorrichtung (132, 132a);
- elektrisches in Kommunikation Bringen einer ersten Aufwärts-Magnetische-Kopplung-Vorrichtung (130a) mit einer ersten Abwärts-Magnetische-Kopplung-Vorrichtung (132a) ; und
- elektrisches in Kommunikation Bringen einer zweiten Aufwärts-Magnetische-Kopplung-Vorrichtung (130b), unterschiedlich von der ersten (130a), mit der ersten Abwärts-Magnetische-Kopplung-Vorrichtung (132a); und/oder
- elektrisches in Kommunikation Bringen der ersten Aufwärts-Magnetische-Kopplung-Vorrichtung (130a) mit einer zweiten Abwärts-Magnetische-Kopplung-Vorrichtung (132), unterschiedlich von der ersten (132a); und/oder
- elektrisches in Kommunikation Bringen der zweiten Aufwärts-Magnetische-Kopplung-Vorrichtung (130b) mit der zweiten Abwärts-Magnetische-Kopplung-Vorrichtung (132).

## Claims

1. An assembly including a ticketing system (1) comprising a plurality of devices (3), each device (3) comprising a reader (17) for reading transport tickets, each transport ticket being a contactless medium (19), and a system (110) for placing in communication the readers (17) of a plurality of devices (3) with at least one contactless medium (19) designed to be read by each reader (17), **characterised in that** the system for placing in communication (110) comprises:
- a plurality of upstream magnetic coupling (130, 130a, 130b, 130c), each suitable for generating an electric current induced under the effect of a magnetic field at the level of the upstream magnetic coupling device (130, 130a, 130b, 130c) and for generating a magnetic field under the effect of an electric current flowing in the upstream magnetic coupling device (130 , 130a, 130b, 130c), each upstream magnetic coupling device (130, 130a, 130b, 130c) being arranged in front of a device (3) of the ticketing system (1), at a sufficient distance so as to permit magnetic coupling of said upstream magnetic coupling device (130, 130a, 130b, 130c) with a transmitter-receiver device (25) of the reader (17) of said device (3);
- at least one downstream magnetic coupling (132, 132a) for generating a magnetic field under the effect of an electric current flowing in the downstream magnetic coupling device (132, 132a) and for generating an electric current induced under the effect of a magnetic field at the level of the downstream magnetic coupling device (132, 132a), the or each downstream magnetic coupling device (132, 132a) being arranged in front of a contactless medium (19), at a sufficient distance so as to permit coupling of said downstream magnetic coupling device magnetic (132, 132a) with a transmitter-receiver device (23) of said contactless medium (19); and
- electric connecting means (134, 138) for electrically connecting each upstream magnetic coupling device (130, 130a , 130b, 130c) to the or each downstream magnetic coupling device (132, 132a).

2. An assembly according to Claim 1, **characterised in that** each magnetic coupling device (130, 130a, 130b, 130c, 132, 132a) is an inductor.

3. An assembly according to Claim 1 or 2, **characterised in that** the electric connecting means (134, 138) comprises a switching device (134) designed for placing in electrical communication each upstream magnetic coupling device (130, 130a, 130b, 130c) selectively with the or each downstream magnetic coupling device (132, 132a).

4. An assembly according to Claim 3, **characterised in that** the switching device (134) is a switching matrix or a multiplexer / demultiplexer unit.

5. An assembly according to Claim 3 or 4, **characterised in that** the switching device (134) is controlled by a computerised programmable control means (136).

6. An assembly according to any one of the preceding claims, **characterised in that** it comprises a plurality of modems (160), each interposed between a magnetic coupling device (130, 130a, 130b, 130c, 132, 132a) and the electrical connection means (134, 138).

7. An assembly according to any one of the preceding claims, **characterised in that** at least one reader (17) and at least one upstream magnetic coupling device (130) are integrated within a single device (3).

8. An assembly according to Claim 7, **characterised in that** said device (3) further comprises a modem (160) associated with the upstream magnetic coupling device (130).

9. An assembly according to Claim 7 or 8, **characterised in that** said device (3) further comprises means (18) for exchanging data with a common central information system (7) shared by multiple devices (3), at least a part of said data being transmitted from or relayed to the coupling device (130) integrated into the said device (3).

10. An assembly according to any one of the preceding claims, **characterised in that** each device (3) comprises means (18) for exchanging data with a common central information system (7) shared by multiple devices (3), at least a part of said data being transmitted from or relayed to a contactless medium (19), and **in that** the system for placing in communication (110) includes a computerised means of control (136), comprising means (151) for communicating with the central information system (7).

11. A method for testing the operation of at least one contactless medium reader (17), capable of exchanging data with a contactless medium (19), in a ticketing system (1), the ticketing system (1) including a plurality of devices (3), each device (3) comprising a reader (17) for reading transport tickets, each transport ticket being a contactless medium (19), **characterised in that** the method comprises the following steps:
- magnetic coupling of the readers (17) of a plurality of devices (3) with a system for placing in communication (110) via, for each device (3), an upstream magnetic coupling device (130, 130a, 130b, 130c) ;
- magnetic coupling of the system for placing in communication (110) with at least one contactless medium (19) via, for each contactless medium (19), a downstream magnetic coupling device (132, 132a) ;
- placing in electrical communication of a first upstream magnetic coupling device (130a) with a first downstream magnetic coupling device (132a) ;and
- placing in electrical communication of a second upstream magnetic coupling device (130b), different from the first (130a), with the first downstream magnetic coupling device (132a); and / or
- placing in electrical communication of the first upstream magnetic coupling device (130a) with a second downstream magnetic coupling (132) different from the first (132a); and / or
- placing in electrical communication of the second upstream magnetic coupling device (130b) with the second downstream coupling magnetic device (132).
